# EUROPÄISCHE PATENTSCHRIFT

(11) **EP 2 109 550 B1**
(45) Veröffentlichungstag und Bekanntmachung des Hinweises auf die Patenterteilung: **07.03.2018**
(21) Anmeldenummer: 07856017.4
(22) Anmeldetag: 26.11.2007
(51) Int. Cl.: B60L 13/10, B60L 3/00

(54) **MAGNETSCHWEBEBAHN UND VERFAHREN ZU DEREN BETRIEB**
MAGNETIC LEVITATION RAILWAY AND METHOD FOR ITS OPERATION
TRAIN À SUSTENTATION MAGNÉTIQUE ET SON PROCÉDÉ D'EXPLOITATION

(30) Priorität: 15.01.2007 DE 102007003118
(43) Veröffentlichungstag der Anmeldung: 21.10.2009
(73) Patentinhaber: ThyssenKrupp Transrapid GmbH, 34127 Kassel (DE)
(72) Erfinder: LÖSER, Friedrich, 85521 Riemerling (DE); ZHENG, Qinghua, 80331 München (DE)
(74) Vertreter: Lorenz, Bernd Ingo Thaddeus
(86) Internationale Anmeldenummer: PCT/DE2007/002123
(87) Internationale Veröffentlichungsnummer: WO 2008/086762

(56) Entgegenhaltungen:
- DE-A1- 2 604 688
- DE-A1- 3 807 919
- DE-A1-102004 013 690
- DE-A1-102004 018 311

## Beschreibung

Die Erfindung betrifft ein Verfahren nach dem Oberbegriff des Anspruchs 1 und eine Magnetschwebebahn nach dem Oberbegriff des Anspruchs 4.

Zum Betrieb von Magnetschwebebahnen dieser Art gibt es zahlreiche bekannte und bereits in die Praxis umgesetzte Vorschläge. Diese beruhen durchweg auf dem Prinzip, die Magnetschwebefahrzeuge im Normalfall mit einem Antriebs- und Bremssystem anzutreiben und abzubremsen, das z. B. einen Langstator-Linearmotor und zu dessen Betrieb bestimmte Steuer- und Regeleinrichtungen aufweist (DE 38 07 919 C2, DE 10 2004 018 311 A1). Ein solcher Langstator-Linearmotor enthält einen in einem Fahrweg installierten Langstator mit Nuten und in diesen verlegten Wechselstromwicklungen, mittels derer längs des Fahrwegs fortschreitende Wanderwellen erzeugt werden. Das Erregerfeld des Langstator-Linearmotors wird durch in den Fahrzeugen angeordnete Tragmagnete erzeugt, die außerdem auch die für das Schweben erforderliche Tragfunktion erfüllen. Die Frequenz der Wanderwellen bestimmt die Geschwindigkeit der Fahrzeuge.

Damit die Fahrzeuge beim Ausfall des Antriebs- und Bremssystems unabhängig davon, wo sie sich momentan befinden und mit welcher Geschwindigkeit sie momentan fahren, kontrolliert zum Stillstand gebracht werden können, sind sie mit einer Zusatzbremse in Form einer Zangenbremse (DE 30 04 705 A1), einer Wirbelstrombremse (DE 10 2004 013 994 A1) od. dgl. versehen. Derartige Zusatzbremsen werden auch beim Auftreten anderer Störungen wie z. B. beim Verlust der Ortung verwendet. In allen Fällen wird mit der Zusatzbremse erreicht, dass die Fahrzeuge sicher an irgendeinem der längs des Fahrwegs vorhandenen Zielhaltepunkte, die auch übliche Bahnhöfe sein können, zum Stillstand gebracht werden können.

Bei praktischen Anwendungen von Magnetschwebebahnen werden heute bevorzugt Wirbelstrombremsen als Zusatzbremsen vorgesehen. Diese sind am Fahrweg installierten Führschienen zugeordnet und erzeugen in diesen bremsende Wirbelströme. Ein Nachteil von Wirbelstrombremsen besteht allerdings darin, dass die zu ihrem Betrieb benötigten, vergleichsweise hohen Ströme nur bei Geschwindigkeiten oberhalb von etwa 100 km/h in den Magnetschwebefahrzeugen selbst erzeugt werden können, z. B. mit Hilfe von sogenannten Lineargeneratoren. Bei darunter liegenden Geschwindigkeiten müssen diese Ströme dagegen von in den Fahrzeugen untergebrachten Batterien geliefert werden. Das hat zur Folge, dass trotz des Umstandes, dass die Wirbelstrombremsen in der Regel nur in einem Störfall aktiviert werden, eine Vielzahl von Batterien benötigt wird, was wegen des zusätzlichen Gewichts und des großen Platzbedarfs unerwünscht ist. Mit anderen Worten müssen die Magnetschwebefahrzeuge immer so betrieben und die längs des Fahrwegs eingerichteten Zielhaltepunkte so gewählt werden, dass die in den Fahrzeugen befindlichen Batterien immer und mit Sicherheit für eine Notbremsung zur Verfügung stehen. Die in Störfällen für die Funktion "Tragen" benötigte elektrische Energie ist demgegenüber vergleichsweise unbedeutend.

Ausgehend davon liegt der Erfindung das technische Problem zugrunde, die Magnetschwebebahn der eingangs bezeichneten Gattung und das Verfahren zu deren Betrieb so gestalten, dass auf Batterien der beschriebenen Art weitgehend verzichtet werden kann und dennoch ein sicheres Bremsen möglich ist.

Zur Lösung dieses Problems dienen die kennzeichnenden Merkmale der Ansprüche 1 und 4.

Die Erfindung bringt den Vorteil mit sich, dass für den Bremsvorgang die Reibungskräfte genutzt werden, die sich beim Absetzen der Fahrzeuge zwischen den Tragkufen und dem Fahrweg ergeben. Zu diesem Zweck kann in Abhängigkeit von der aktuellen Situation nur eine, eine Mehrzahl oder auch die Gesamtheit aller vorhandenen Tragkufen für den Bremsvorgang genutzt werden. Ein etwaiger Verschleiß der Tragkufen oder der mit diesen zusammenwirkenden Gleitschienen des Fahrwegs sind weitgehend unschädlich, da diese Art der Bremsung, wie oben erwähnt ist, nur in Störfällen und daher fast nie oder zumindest äußerst selten angewendet wird. Vorteilhaft ist ferner, dass die Tragkufen ohnehin bereits an den Fahrzeugen vorhanden sind und daher die sonst üblichen, aufwendigen Zusatzbremsen in Form von Wirbelstrombremsen od. dgl. ganz entfallen können. Außerdem werden allenfalls noch Batterien mit geringer Speicherkapazität benötigt, um die Tragfunktion der Tragmagnete aufrecht erhalten zu können, solange dies erforderlich ist. Die durch das Absetzen von Magnetschwebefahrzeugen auf ihren Tragkufen bewirkte Bremswirkung ist grundsätzlich bekannt (DE 10 2004 018 311 A1). Im bekannten Fall ist die Bremswirkung jedoch die Folge einer aus anderen Gründen bewirkten, von den Fahrzeugen aus eingeleiteten, gleichzeitigen Abschaltung aller Erregerfelder bzw. Tragmagnete mit dem Ziel, im Bereich von Zielhaltepunkten etwaige Störungen des Antriebsund Bremssystems, z. B. eine irrtümliche oder in falscher Richtung erfolgende Beschleunigung anstatt einer Abbremsung, sofort zu unterbinden. Dagegen werden die Reibungskräfte zwischen den Tragkufen und dem Fahrweg erfindungsgemäß kontrolliert und gezielt zum Bremsen benutzt, um dadurch zusätzliche Bremsen unnötig zu machen, wobei die Steuerung der Bremskraft ohne weiteres auch von einem zentralen, außerhalb der Magnetschwebefahrzeuge angeordneten Fahrtrechner aus gesteuert werden kann.

Weitere vorteilhafte Merkmale der Erfindung ergeben sich aus den Unteransprüchen.

Die Erfindung wird nachfolgend in Verbindung mit den beiliegenden Zeichnungen an einem Ausführungsbeispiel näher erläutert. Es zeigen:
Fig. 1 einen schematischen Teilquerschnitt durch ein übliches Fahrzeug einer Magnetschwebebahn;
Fig. 2 in einer vereinfachten, schematischen Seitenansicht Einzelheiten eines Teils des Fahrzeugs nach Fig. 1;
Fig. 3 eine vergrößerte Einzelheit X des Fahrzeugs nach Fig. 2 mit weiteren Komponenten;
Fig. 4 ein schematisches Blockschaltbild zur Steuerung der erfindungsgemäßen Bremsfunktion bei einem Fahrzeugs nach Fig. 2 und 3;
Fig. 5 und 6 mögliche Bremskurven für ein Fahrzeug nach Fig. 2 und 3;
Fig. 7 eine erfindungsgemäß herbeigeführte Bremskurve für ein Fahrzeug nach Fig. 2 und 3; und
Fig. 8 ein schematisches Flussdiagramm zur Durchführung eines erfindungsgemäßen Bremsvorgangs.

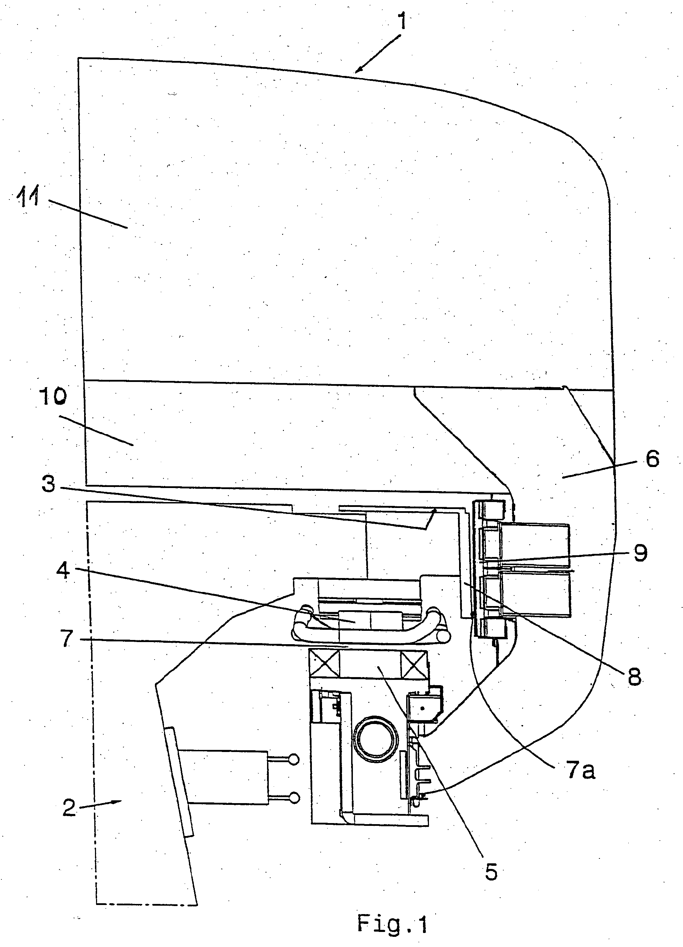

Fig. 1 zeigt schematisch einen Querschnitt durch ein Magnetschwebefahrzeug 1, das in üblicher Weise auf einem Fahrweg fahrbar montiert ist, der aus Stahl und/oder Beton hergestellte Träger 2 und auf diesen montierte Gleitschienen 3 enthält. Der Antrieb des Fahrzeugs 1 erfolgt mittels eines Langstator-Linearmotors, der unterhalb der Gleitschienen 3 befestigte, in deren Längsrichtung aufeinander folgende Statorpakete aufweist. Die Statorpakete 4 weisen abwechselnd aufeinander folgende, nicht dargestellte Zähne und Nuten auf, in die Wicklungen eingelegt sind, die mit Drehstrom variabler Amplitude und Frequenz gespeist werden. Das eigentliche Erregerfeld des Langstator-Linearmotors wird durch wenigstens eine Tragmagnetanordnung 5 erzeugt, die mit wenigstens einem seitlichen Gestellbügel 6 am Fahrzeug 1 befestigt ist und den Statorpaketen 4 zugewandte Magnetpole aufweist. Die Tragmagnetanordnung 5 stellt nicht nur das Erregerfeld bereit, sondern erfüllt auch die Funktion des Tragens und Schwebens, indem sie beim Betrieb des Fahrzeugs 1 einen vorgegebenen Spalt 7 von z. B. 10 mm zwischen sich und den Statorpaketen 4 aufrecht erhält.

Zur Spurführung des Fahrzeugs 1 weisen die Träger 2 seitlich angebrachte Reaktions- bzw. Seitenführschienen 8 auf, denen ebenfalls an den Gestellbügeln 6 montierte Führmagnetanordnungen 9 gegenüberstehen, die beim Betrieb dazu dienen, zwischen sich und der Reaktionsschiene 8 einen dem Spalt 7 entsprechenden Spalt 7a aufrecht zu erhalten. Dabei bilden die in Fig. 1 gezeigte Tragmagnetanordnung 5 und die Führmagnetanordnung 9 jeweils ein an den Gestellbügeln 6 befestigtes Magnetsystem, für die Funktionen "Tragen" bzw. "Führen". Es ist jedoch klar, dass am Fahrzeug 1 seitlich nebeneinander und in Fahrtrichtung hintereinander in der Regel eine Mehrzahl derartiger Magnetsysteme angebracht sein kann, die mittels der Gestellbügel 6 mit einem biegesteifen, Längs- und Querverbinder aufweisenden Unter- bzw. Schwebegestell 10 verbunden sind, auf dem ein mit einer Fahrgastzelle versehener Wagenkasten 11 des Fahrzeugs 1 (Fig. 1) abgestützt ist.

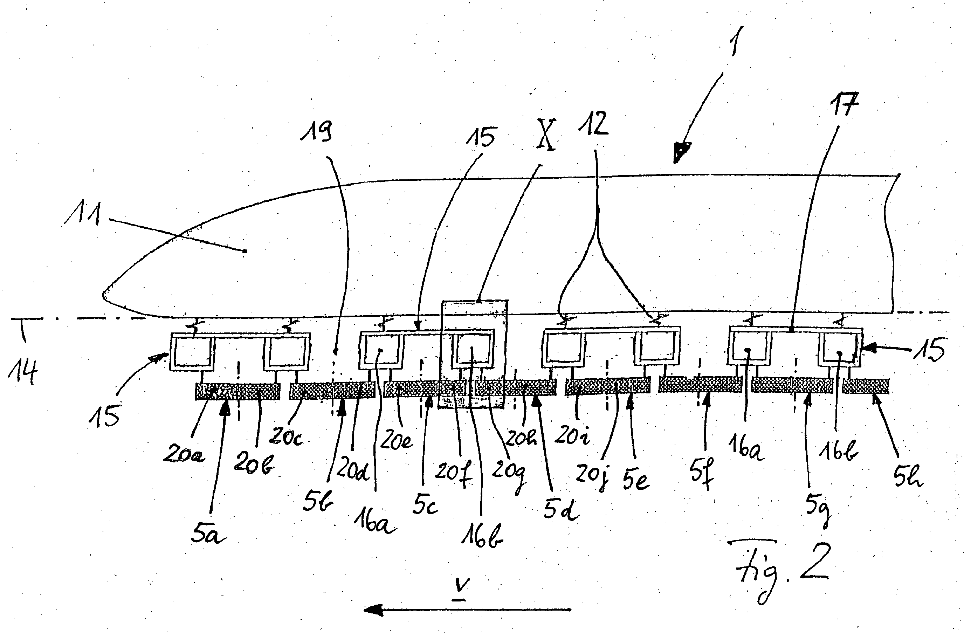

Nach Fig. 2 sind an der Unterseite des Wagenkastens 11 mehrere Luftfedern 12 montiert, die in Richtung einer Fahrzeug-Längsachse 14 und in einer dazu parallelen Fahrtrichtung (Pfeil v) beabstandet sind. Die Luftfedern 12 wirken auf vordere und hintere Enden von Schwebegestellabschnitten 15 ein, die insgesamt das Schwebegestell 10 (Fig. 1) bilden. Jeder Schwebegestellabschnitt 15 enthält im Ausführungsbeispiel zwei in Richtung der Längsachse 14 hintereinander angeordnete Abstützelemente 16a, 16b in Form von Rahmenteilen od. dgl. und diese fest miteinander verbindende Längsträger 17, wobei das Abstützelement 16a jeweils in Fahrtrichtung vorn liegt.

Nach Fig. 2 weist das Fahrzeug 1 ferner eine Mehrzahl von in Längsrichtung hintereinander liegenden Tragmagnetanordnungen 5a ... 5h auf. Jede Tragmagnetanordnung 5a ... 5h ist durch eine gedachte, mit einer strichpunktierten Linie 19 angedeutete Mittelebene in zwei elektrisch voneinander getrennte, jedoch mechanisch zusammenhängende Hälften unterteilt. Jede Hälfte enthält eine bestimmte Anzahl von z.B. sechs Magnetpolen, deren Wicklungen eine Gruppe bilden, die jeweils unabhängig von allen anderen Gruppen mit Strom versorgt werden kann. Jede Tragmagnetanordnung 5a ... 5h besteht daher aus einem konstruktiv zusammenhängenden, z.B. zwölf Magnetpole aufweisenden Bauteil, elektrisch aber aus zwei voneinander getrennten Teilen, die nachfolgend entsprechend Fig. 2 der Einfachheit halber als Tragmagnete 20a, 20b bzw. 20c, 20d usw. bzw. 20 i, 20j bezeichnet sind.

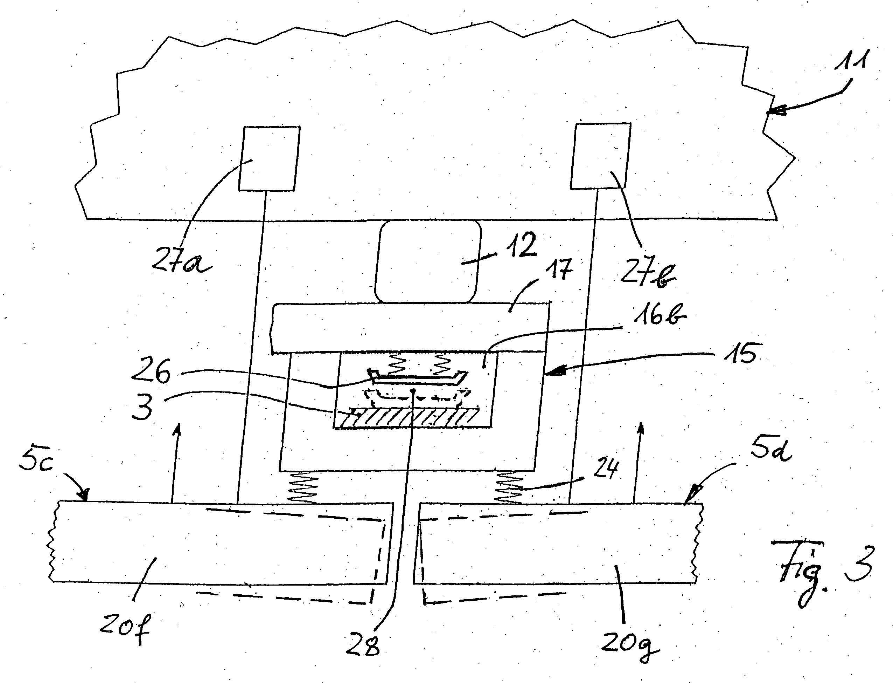

Aus Fig. 2 und 3 ist weiter ersichtlich, dass jedes Abstützelement 16a, 16b mit je zwei der Tragmagnete 20a ... 20j verbunden ist. So ist beispielsweise das vordere Abstützelement 16a eines der Schwebegestellabschnitte 15 an seiner Vorderseite mit dem hinteren Tragmagneten 20d einer vorlaufenden Tragmagnetanordnung 5b und an seine Hinterseite mit dem vorderen Tragmagneten 20e einer nachlaufenden Tragmagnetanordnung 5c verbunden, während das hintere Abstützelement 16b desselben Schwebegestellabschnitts 15 entsprechend mit dem hinteren Tragmagneten 20f der Tragmagnetanordnung 5c und dem vorderen Tragmagneten 20g der nachfolgenden Tragmagnetanordnung 5d usw. verbunden ist.

Gemäß Fig. 3 erfolgt die Verbindung der Abstützelemente 16a, 16b bzw. der zugehörigen, in Fig. 3 nicht dargestellten Gestellbügel 6 mit den Tragmagneten 20a ... 20j über zusätzliche Federn 24. Abgesehen davon ist klar, dass die Schwebegestellabschnitte 15 und die Tragmagnetanordnungen 5a ... 5h derart gelenkig miteinander verbunden sind, daß sie sowohl bei Kurven- als auch bei Berg- und Talfahrten der Fahrzeuge 1 die erforderlichen Relativbewegungen zueinander ausführen können.

Schließlich zeigt Fig. 3 in einer gegenüber Fig. 1 etwas anderen, ebenfalls schematischen Darstellung eine der Gleitschienen 3 und eine ihr zugeordnete, an der Unterseite des Schwebegestellabschnitts 15 befestigte Tragkufe 26. Mit diesen Tragkufen 26 wird das Fahrzeug 1 auf dem Fahrweg bzw. dessen Gleitschienen 3 abgesetzt, wenn die Tragmagnete (20a ... 20j) stromlos sind. Vorzugsweise ist entsprechend Fig. 3 jedem Abstützelement 16a, 16b des Schwebegestells 10 jeweils eine solche Tragkufe 26 zugeordnet, die daher dann auf der zugehörigen Gleitschiene 3 abgesetzt wird, wenn zwei zugeordnete Tragmagnete z.B. (20f, 20g in Fig. 3) stromlos gemacht werden.

Im übrigen ist klar, dass die beschriebenen Anordnungen, insbesondere die Tragmagnetanordnungen 5a ... 5h und die Tragkufen 26 vorzugsweise sowohl auf der rechten als auch auf der linken Fahrzeugseite in identischer Form vorhanden sind.

Die Versorgung der Tragmagnetanordnungen 5a ... 5h bzw. der Tragmagnete 20a ... 20j mit Strom erfolgt mit Hilfe von Regelkreisen (z. B. 27a und 27b in Fig. 3), die z. B. im Wagenkasten 17 untergebracht sind und im Schwebezustand dazu dienen, den Luftspalt 7 (Fig. 1) zwischen den Tragmagnetanordnungen 5a ... 5h und den Statorpaketen 4 aufrecht zu erhalten. In diesem Fall besteht zwischen den Tragkufen 26 und den Gleitschienen 3 ein entsprechender Spalt 28 (Fig. 3).

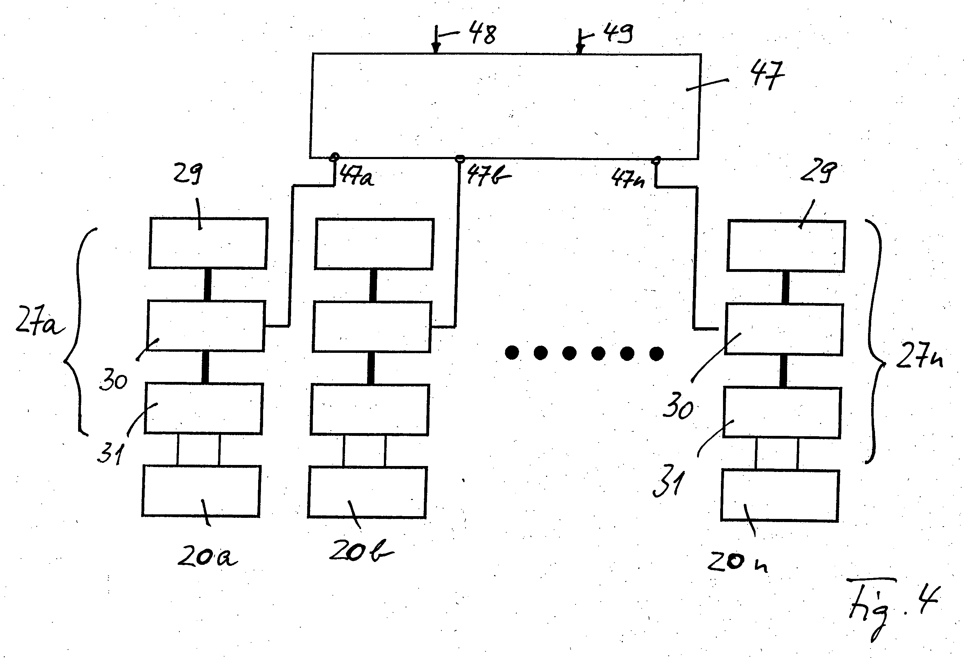

Die mit den verschiedenen Tragmagneten 20a ... 20j verbundenen Regelkreise 27a, 27b, ... 27n sind in Fig. 4 schematisch dargestellt, wobei im Ausführungsbeispiel n = 2k ist, wenn k die Zahl der vorhandenen Tragmagnetanordnungen 5a ... 5h bedeutet. Es wird in diesem Fall, wie oben beschrieben ist, davon ausgegangen, dass die Wicklungen eines jeden Tragmagneten 20a ... 20j mit Hilfe einer separaten Regelschaltung 27a ... 27n mit Strom versorgt werden können (z. B. DE 10 2004 012 748 A1). Jede Regelschaltung 27a ... 27n enthält außerdem gemäß Fig. 4 wenigstens einen Spaltsensor 29, der den aktuellen Istwert des Spalts 7 misst, einen mit dem Sensor 29 verbundenen Regler 30, der den Istwert mit einem vorgegebenen Sollwert vergleicht und ein Differenz- bzw. Stellsignal erzeugt, und einen Stromsteller 31, dem dieses Stellsignal zugeführt wird und mittels dessen der Strom durch die Wicklungen des mit ihm verbundenen Tragmagneten 20a ... 20j so gesteuert wird, dass der Tragspalt 7 im wesentlichen konstant bleibt, solange es erwünscht ist, das Fahrzeug 1 im Schwebezustand zu halten. Alle Regelschaltungen 27a ... 27n sind zweckmäßig identisch aufgebaut.

Magnetschwebebahnen der beschriebenen Art sind z. B. aus den Dokumenten DE 38 07 919 C2, DE 10 2004 012 748 A1, DE 10 2004 013 690 A1 und DE 10 2004 018 311 A1 allgemein bekannt, die daher zur Vermeidung weiterer Erläuterungen hiermit durch Referenz auf sie zum Gegenstand der vorliegenden Offenbarung gemacht werden.

Während übliche Magnetschwebebahnen neben dem beispielhaft beschriebenen Antriebs- und Bremssystem in Form eines Langstators-Linearmotors eine als Zangenbremse, Wirbelstrombremse od. dgl. ausgebildete Zusatzbremse enthalten, ist erfindungsgemäß eine Zusatzbremse vorgesehen, die als aktive Bremselemente lediglich die Tragkufen 26 (Fig. 3) aufweist. Die Erfindung geht insbesondere davon aus, dass die Reibungskräfte zwischen den Tragkufen 26 und den Gleitschienen 3 ausreichend groß sind, um die notwendige Verzögerung des Fahrzeugs 1 in einem Störfall sicher herbeiführen zu können. Außerdem macht sich die Erfindung die Tatsache zu nutze, dass die im Schwebezustand zwischen dem Fahrzeug 1 und dem Fahrweg 2, 3 bestehenden Spalte 7, 28 so klein sind, dass die Tragkufen 26 einzeln und unabhängig voneinander dadurch auf dem Fahrweg bzw. den betreffenden Gleitschienen 3 abgesetzt werden können, dass die zugehörigen Tragmagnete 20a ... 20j abgeschaltet werden. Das ist in Fig. 3 schematisch und übertrieben groß durch gestrichelte Linien angedeutet, wonach die dort dargestellte Tragkufe 26 unabhängig von allen anderen vorhandenen Tragkufen 26 dadurch auf der Gleitschiene 3 abgesetzt werden kann, dass die durch die Wicklungen der zugeordneten Tragmagnete 20f und 20g fließenden Ströme mittels der Regelschaltungen 27a und 27b abgeschaltet werden, so dass diese Tragmagnete 20f und 20g ihre Tragfunktion verlieren. Fig. 3 zeigt, dass die beiden Tragmagnete 20f und 20g gegenüber den nicht dargestellten Statorpaketen 4 abgesenkt sind, was aufgrund ihrer gelenkigen Verbindungen mit den zugehörigen Schwebegestellabschnitten 15 möglich ist, auch wenn die übrigen Tragmagnete 20a ... 20g Tragmagnethälften weiterhin mit Strom versorgt werden.

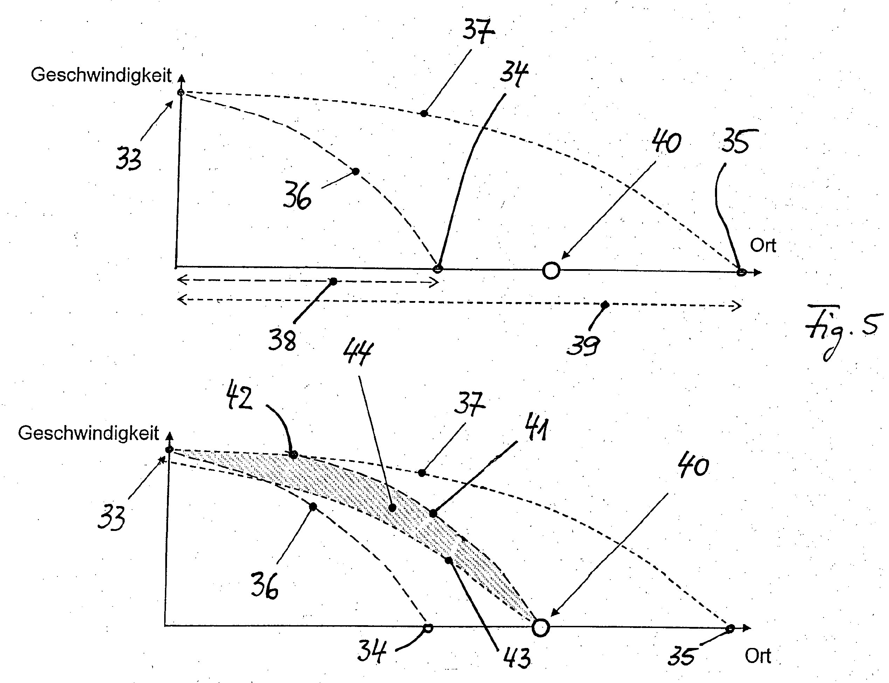

Die Grenzen der auf diese Weise ermöglichten Abbremsung sind in Fig. 5 dargestellt. Ausgehend von einem längs Abszisse abgetragenen Ort 33 kann ein Fahrzeug, das sich mit einer längs der Ordinate abgetragenen Geschwindigkeit bewegt und - aus welchen Gründen auch immer - bei abgeschaltetem Antriebs- und Bremssystem abgebremst werden soll, höchstens noch einen Ort 34 erreichen, falls alle Tragkufen 26 am Ort 33 gleichzeitig auf den Gleitschienen 3 abgesetzt werden. Dagegen würde das Fahrzeug für den Fall, dass lediglich das Antriebsund Bremssystem ausgeschaltet, das Fahrzeug aber weiterhin im Schwebezustand gehalten würde, einen Ort 35 erreichen. Die Lage beider Orte 34, 35 hängt einerseits insbesondere davon ab, welche Geschwindigkeit das Fahrzeug am Ort 33 hatte. Andererseits sind für die Lage des Ortes 34 vor allem die aktuellen, z. B. vom Wetter (Trockenheit, Nässe usw.) abhängigen Reibungsverhältnisse zwischen Gleitpartnern Tragkufen 26/Gleitschienen 3 maßgeblich, während für das Erreichen des Ortes 35 z. B. die Windverhältnisse (Gegenwind, Rückenwind usw.) Bedeutung haben. In beiden Fällen ist außerdem das Streckenprofil (z. B. ebene, ansteigende oder abfallende Strecke) beachtlich. Zu den Orten 34 und 35 führende Bremskurven 36, 37 sind in Fig. 5 gestrichelt dargestellt. Außerdem sind unterhalb der Abszisse durch Pfeile 38, 39 die Längen der jeweiligen Bremswege dargestellt.

Sind die Lagen ausgewählter Zielhaltepunkte 40 (Fig. 5 und 6) üblicherweise so gewählt, dass das Fahrzeug beim Ausfall des Antriebs- und Bremssystems im Schwebezustand mit Sicherheit noch den in Fahrtrichtung unmittelbar folgenden Haltebereich erreichen kann (z. B. DE 38 07 919 C2), dann liegt beim Auftreten eines Störfalls der nächste anfahrbare, in Fig. 5 mit dem Bezugszeichen 40 bezeichnete Zielhaltepunkt auf jeden Fall in Fahrtrichtung v vor dem Ort 35. Dagegen ist hinsichtlich des vor dem Zielhaltepunkt 40 liegenden Ortes 34 angenommen, dass das Fahrzeug beim Auftreten der Störung noch so weit vom Zielhaltepunkt 40 entfernt ist, dass es zumindest durch Absetzen aller Tragkufen 26 rechtzeitig abgebremst werden kann. Wäre das nicht der Fall, müsste das Fahrzeug so lange im Schwebezustand verbleiben, dass es auch den längs der Fahrtstrecke auf den Ort 35 folgenden Haltebereich sicher erreichen kann. Da sich unter Beachtung der verschiedenen möglichen Reibungsverhältnisse, Windgeschwindigkeiten usw., ausgehend von irgendeinem Ort 33 längs der Strecke, jeweils eine günstigste und eine ungünstigste (Worst-Case) Bremskurve 36 bzw. 37 ergibt, wird für die Zwecke der Erfindung und die nachfolgende Beschreibung zweckmäßig stets angenommen, dass die Bremskurven 36, 37 in Fig. 5 den jeweils ungünstigten Fall darstellen. Die sich daraus ergebenden Möglichkeiten sind in Fig. 6 angedeutet. Es sei wieder angenommen, dass der nächste, in Fahrtrichtung folgende Haltebereich durch den Zielhaltepunkt 40 definiert ist. An diesem Zielhaltepunkt 40 endet eine Bremskurve 41, die den Fall repräsentiert, dass alle Tragkufen 26 abgesetzt sind. Ein sicherer Halt am Zielhaltepunkt 40 durch gleichzeitiges Absetzen aller Tragkufen 26 ist daher gerade noch dann möglich, wenn die Abbremsung spätestens an einem Punkt 42 eingeleitet wird. Dagegen könnte für den Fall, dass sich das Fahrzeug noch weit genug vor dem Ort 33 befindet, der Zielhaltepunkt 40 auch im Schwebezustand längs einer Bremskurve 43 erreicht werden.

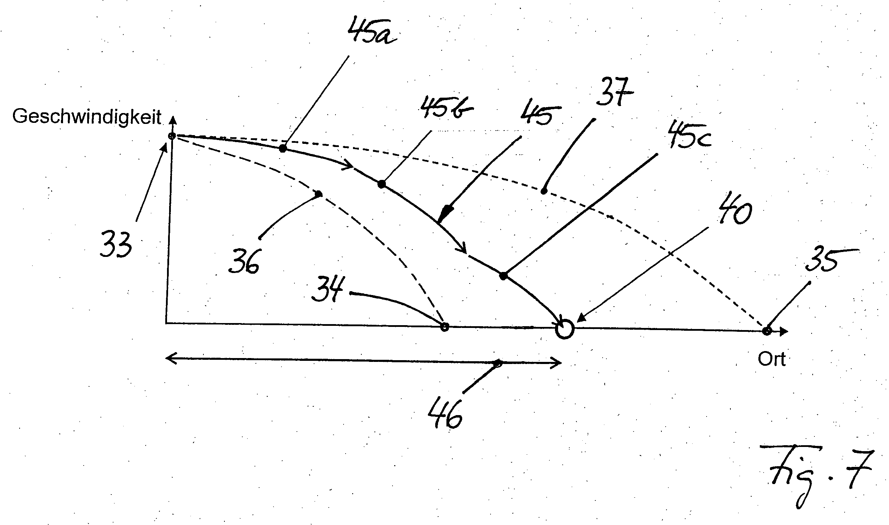

Schließlich zeigt Fig. 6, dass hier je nachdem, wo die Abbremsung des Fahrzeugs eingeleitet wird, ein schraffiert dargestellter Flächenabschnitt erhalten wird, der einen für den ungünstigsten Fall anwendbaren Operationsbereich 44 darstellt. Dieser Operationsbereich 44 ist oben durch die Bremskurve 41 und unten durch die Bremskurve 43 begrenzt und zeigt an, dass innerhalb des schraffierten Bereichs unterschiedliche und ggf. miteinander kombinierbare Bremsmannöver durch Absetzung einiger, aller oder gar keiner Tragkufen 26 durchgeführt werden können, um letzlich sicher den Zielhaltepunkt 40 zu erreichen. Hierzu stellt Fig. 7 ein Beispiel dar, wonach der Zielhaltepunkt 40 dadurch erreicht wird, dass die Zahl der Tragkufen 26, auf denen das Fahrzeug gleitet, variiert wird, was innerhalb des Operationsbereichs 44 nach Fig. 6 z. B. zu einer Bremskurve 45 mit drei Abschnitte 45a, 45b und 45c führt. Der Abschnitt 45a ergibt sich dadurch, dass zunächst nur einige Tragkufen 26 abgesetzt werden, um dadurch die nach dem Ausschalten des Antriebsund Bremssystems auch im Schwebezustand einsetzende Abbremsung zu unterstützen, was aber zum Erreichen des Zielhaltepunkts 40 nicht ausreichend wäre. Im Abschnitt 45b werden daher weitere oder alle Tragkufen 26 abgesetzt. Da dies einen Stillstand des Fahrzeugs vor dem Erreichen des Zielhaltepunkts 40 bewirken würde, werden schließlich im Abschnitt 45c wieder einige Tragkufen 26 angehoben, um zu vermeiden, dass das Fahrzeug vorzeitig zum Stillstand kommt. Der Bremsweg ab Beginn des Abbremsvorgangs (Ort 33) ist in Fig. 7 mit einem Pfeil 46 gekennzeichnet.

Die Bremskurve 45 in Fig. 7 zeigt somit, dass die zum Erreichen der Zielhaltepunkte benötigten Reibungskräfte durch die Zahl der Tragkufen 26, auf denen das Magnetschwebefahrzeug 1 abgesetzt wird, und die Zeitpunkte, zu denen dies erfolgt, erzeugt werden. Außerdem werden die benötigten Reigungskräfte natürlich permanent in Abhängigkeit von der aktuellen Geschwindigkeit des Fahrzeugs und seinem Abstand von Zielhaltepunkt 40 berechnet und ggf. korrigiert.

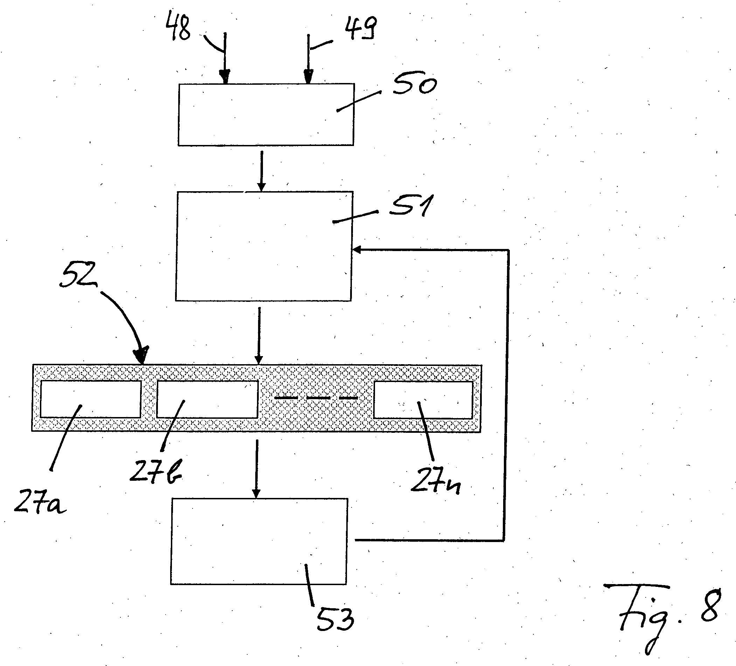

Ein Beispiel für die praktische Anwendung des erfindungsgemäßen Verfahrens ist aus Fig. 4 und 8 ersichtlich. Fig. 4 zeigt einen Rechner 47, der n Ausgänge 47a bis 47n aufweist, die mit den Reglern 30 der Regelschaltungen 27a ... 27n verbunden sind. Über die Ausgänge 47a ... 47n werden die mit ihnen verbundenen Regler 30 so gesteuert, dass ausgewählte Tragmagnete 20a ... 20j abgeschaltet, d. h. stromlos gemacht werden. Soll z. B. die in Fig. 3 dagestellte Tragkufe 26, deren Lage im Fahrzeug 1 aus Fig. 2 ersichtlich ist, abgesenkt werden, dann werden über den Rechner 47 die beiden Tragmagnete 20f, 20g abgeschaltet. Soll die Tragkufe 26 zu einem späteren Zeitpunkt (z. B. Abschnitt 45c in Fig. 7) wieder angehoben werden, werden die genannten Tragmagnete 20f, 20g mittels des Rechners 47 wieder eingeschaltet. Das Ein- und Ausschalten der Tragmagnete 20a ... 20j bzw. Tragmagnethälften kann z. B. dadurch erfolgen, dass den Reglern 30 ein unendlich großer Sollwert für den Tragspalt 7 vorgegeben wird.

Fig. 8 zeigt schematisch, wie im Einzelfall die Bremskurve (z. B. 45 in Fig. 7) zu berechnen ist. Dem Rechner 47 werden gemäß Fig. 4 in bekannter Weise (z. B. DE 38 07 919 C2) permanent Signale zugeführt, die die aktuelle Fahrzeuglage (Leitung 48) und die aktuelle Fahrzeuggeschwindigkeit (Leitung 49) angeben. Beim Auftreten eines Störfalls, der das Abschalten des Antriebs- und Bremssystem zur Folge hat, kann der Rechner 47 anhand dieser Werte und anhand der in einem Speicher des Rechners 47 abgelegten Werte betreffend die im ungünstigen Fall zu beachtenden Reibungs- und Windverhältnisse od. dgl. sowie anhand eines festgelegten Programms zunächst den nächsten, im Sinne der obigen Beschreibung in Frage kommenden Zielhaltepunkt 40 ermitteln (Kasten 50 in Fig. 8). Anschließend wird der Rechner 47 berechnen, welche Tragkufen 26 im Einzelfall abzusetzen sind und wann dies erfolgen soll, d. h. es werden die Anzahl der anzuwendenden Tragkufen 26 und die Zeitpunkte, zu denen sie abgesetzt werden sollen, berechnet (Kasten 51 in Fig. 8). Dabei ist klar, dass die berechneten Zeitpunkte immer bedeuten, dass das Fahrzeug einen bestimmten Ort längs der Strecke erreicht hat. Als Folge dieser Berechnungen werden anschließend die Regler 30 der verschiedenen Regelschaltungen 27a ... 27n angewiesen, die zugehörigen Tragmagnete 20a ... 20j bzw. Tragmagnethälften aus- oder wieder einzuschalten (Bock 52 in Fig. 8). Schließlich soll ein Block 53 in Fig. 8 andeuten, dass anhand der jeweiligen Istpositionen und Istgeschwindigkeiten des Fahrzeugs laufend überwacht und neu berechnet wird, ob das vom Rechner 47 eingeleitete Bremsmanöver zum Ziel führt und das Fahrzeug tatsächlich so abgebremst wird, dass es den Zielhaltepunkt 40 (Fig. 7) sicher erreicht und dort zum Stillstand kommt. Bei Bedarf werden die ausgewählten Absatzvorgänge mehrfach wiederholt, korrigiert und an sich ändernde Umweltbedingungen angepasst.

Die beschriebene Art der Bremsung bringt mehrere Vorteile mit sich. Vorteilhaft ist vor allem, dass die Zahl und die Kapazitäten der benötigten Batterien wesentlich geringer als bisher sein können, da für den eigentichen Bremsvorgang keine elektrische Energie mehr benötigt wird. Außerdem ergibt sich wegen der Vielzahl der vorhandenen Tragkufen 26 eine hohe Redundanz, wegen des Fehlens zusätzlicher Bremseinrichtungen eine Reduzierung der Herstellung und Wartungskosten und außerdem bei richtiger Auswahl der abgesetzten Tragkufen eine gleichmäßige Lastverteilung beim Bremsvorgang. Letzteres wird vorzugsweise im Programm des Rechners 47 dadurch festgelegt, das stets gefordert wird, das diejenigen Tragkufen 26, auf denen das Fahrzeug 1 jeweils abgesetzt wird, zu einer möglichst gleichmäßigen Lastverteilung führen (z. B. rechts, links, vorn, hinten usw.).

Die Erfindung ist nicht auf das beschriebene Ausführungsbeispiel beschränkt, das auf vielfache Weise abgewandelt werden kann. Insbesondere sind die Zahl der vorhandenen Tragkufen 26 und ihre Anordnung längs des Fahrzeugs weitgehend frei wählbar. Ferner ist es möglich, die relativen Lagen der Tragmagnetanordnungen 5a ... 5h, der Tragmagnete 20a ... 20j und der Tragkufen 26 anders zu wählen, als in Fig. 3 dargestellt ist. Außerdem können die Tragmagnetanordnungen 5a ... 5h mit mehr als zwei einzeln steuerbaren Teilen bzw. Gruppen von Magnetpolen versehen sein. Möglich wäre auch, jeder Tragkufe 26 einen einzelnen Tragmagneten 20a ... 20j zuzuordnen. Außerdem können die Art der Ermittlung der Bremskurven und die daraus resultierende Auswahl der Zahl der abgesetzten Tragkufen sowie der der Zeitpunkte, zu denen diese abgesetzt werden, weitgehend vom Einzelfall abhängig gemacht und variiert werden. Schließlich versteht sich, dass die verschiedenen Merkmale auch in anderen als den beschriebenen und dargestellten Kombinationen angewendet werden können.

## Patentansprüche

1. Verfahren zum Betreiben einer Magnetschwebebahn, die einen Fahrweg (2, 3), und ein Magnetschwebefahrzeug (1) mit einer Mehrzahl von Tragmagneten (20a ... 20j) und diesen zugeordneten Tragkufen (26) enthält, wobei das Magnetschwebefahrzeug (1) während seiner Fahrt längs des Fahrwegs (2, 3) mittels der Tragmagnete (20a ... 20j) in einem Schwebezustand gehalten, an Zielhaltepunkten (40) durch Abschaltung der Tragmagnete (20a ... 20j) mittels der Tragkufen (26) auf dem Fahrweg (2, 3) abgesetzt und vor dem Erreichen eines Zielhaltepunkts (40) allmählich abgebremst wird, wobei die Abbremsung allein dadurch herbeigeführt oder unterstützt wird, dass bereits vor dem Erreichen des Zielhaltepunkts (40) wenigstens einer der Tragmagnete (20a ... 20j) abgeschaltet und das Magnetschwebefahrzeug (1) mittels der diesem Tragmagneten (20a ... 20j) zugeordneten Tragkufe (26) auf dem Fahrweg (2, 3) abgesetzt und unter Ausnutzung der dadurch entstehenden Reibungskräfte am Zielhaltepunkt (40) zum Stillstand gebracht wird, **dadurch gekennzeichnet, dass** die zum Erreichen des Zielhaltepunkts (40) benötigten Reibungskräfte durch die Zahl der Tragkufen (26), auf denen das Magnetschwebefahrzeug (1) abgesetzt wird, und die Zeitpunkte, zu denen dies erfolgt, erzeugt werden, wobei die Erzeugung der Reibungskräfte in Abhängigkeit von der Geschwindigkeit des Magnetschwebefahrzeugs (1) und seinem Abstand vom Zielhaltepunkt (40) erfolgt.

2. Verfahren nach Anspruch 1, **dadurch gekennzeichnet, dass** die Tragkufen (26), auf denen das Magnetschwebefahrzeug (1) abgesetzt wird, so ausgewählt werden, dass sich eine gleichmäßige Lastverteilung in Längs- und Querrichtung des Magnetschwebefahrzeugs (1) ergibt.

3. Verfahren nach Anspruch 1 oder 2, **dadurch gekennzeichnet, dass** die Zahl der Tragkufen (26), auf denen das Magnetschwebefahrzeug (1) abgesetzt wird, während eines Abbremsvorgangs überwacht und bei Bedarf verändert wird.

4. Magnetschwebebahn mit einem Fahrweg (2, 3), wenigstens einem längs des Fahrwegs (2, 3) fahrbaren, eine Mehrzahl von Tragmagneten (20a ... 20j) und diesen zugeordneten Tragkufen (26) aufweisenden Magnetschwebefahrzeug (1), das während der Fahrt mittels der Tragmagnete (20a ... 20j) in einem Schwebezustand gehalten und an Zielhaltepunkten (40) durch Abschaltung der Tragmagnete (20a ... 20j) mit den Tragkufen (26) auf dem Fahrweg (2, 3) abgesetzt wird, einem Antriebsund Bremssystem für das Magnetschwebefahrzeug (1) und einer Zusatzbremse zum allmählichen Abbremsen des Magnetschwebefahrzeugs (1) in einem Störfall vor dem Erreichen eines Zielhaltepunkts (40), **dadurch gekennzeichnet, dass** die Zusatzbreme als aktive Bremselemente allein die Tragkufen (26) enthält sowie mit Mitteln zur Abschaltung ausgewählte Tragmagnete (20a ... 20j) versehen ist, um das Fahrzeug (1) in einem Störfall bereits vor dem Erreichen des Zielhaltepunkts (40) mit den abgeschalteten Tragmagneten (20a ... 20j) zugeordneten Tragkufen (26) auf dem Fahrweg (2, 3) abzusetzen, wobei die Zusatzbremse einen Rechner (47) aufweist, der dazu eingerichtet ist, die Zahl der Tragkufen (26), auf denen das Magnetschwebefahrzeug (1) abgesetzt werden soll, und die Zeitpunkte, zu denen dies erfolgen soll, in Abhängigkeit von der Geschwindigkeit des Magnetschwebefahrzeugs (1) und von seinem Abstand vom Zielhaltepunkt (40) zu ermitteln.

5. Magnetschwebebahn nach Anspruch 4, **dadurch gekennzeichnet, dass** die Tragmagnete (20a ... 20j) mit Regelschaltungen (27a ... 27n) verbunden sind, die der Herstellung eines vorgewählten Spalts (7) zwischen den Tragmagneten (20a ... 20j) und dem Fahrweg (2, 3) während des Schwebezustands eingerichtet sind, und dass der Rechner (47) an die Regelschaltungen (27a ... 27n) angeschlossen ist.

## Claims

1. A method for operating a magnetic levitation railway which contains a track (2, 3) and a magnetic levitation vehicle (1) with a plurality of levitation magnets (20a ... 20j) and support skids (26) assigned thereto, wherein the magnetic levitation vehicle (1) is held in a floating state by means of the levitation magnets (20a ... 20j)while travelling along the track (2, 3), lowered at destinations (40) by disconnecting the levitation magnets (20a ... 20j) by means of the support skids (26) on the track (2, 3) and gradually slowed down before the destination (40) is reached, wherein the slowing down is brought about or assisted simply in that at least one of the levitation magnets (20a ... 20j) is disconnected before the destination (40) is reached and the magnetic levitation vehicle (1) is lowered by means of the support skids (26) assigned to this levitation magnet (20a ... 20j) on the track (2, 3) and brought to a standstill at the destination (40) using the frictional forces thereby created, **characterized in that** the frictional forces required in order to reach the destination (40) are produced by the number of support skids (26) on which the magnetic levitation vehicle (1) is lowered and the times at which this takes place, wherein production of the frictional forces takes place depending on the speed of the magnetic levitation vehicle (1) and its distance from the destination (40).

2. The method according to claim 1, **characterized in that** the support skids (26) on which the magnetic levitation vehicle (1) is lowered are selected in such a manner that a uniform load distribution results in the longitudinal and transverse direction of the magnetic levitation vehicle (1) results.

3. The method according to claim 1 or 2, **characterized in that** the number of support skids (26) on which the magnetic levitation vehicle (1) is lowered is monitored during the braking action and modified where necessary.

4. A magnetic levitation railway having a track (2, 3), at least one magnetic levitation vehicle (1) that can be driven along the track (2, 3) and has a plurality of levitation magnets (20a ... 20j) and support skids (26) assigned thereto, which magnetic levitation vehicle is held in a floating state while travelling by means of the levitation magnets (20a ... 20j) and is lowered at destinations (40) by disconnecting the levitation magnets (20a ... 20j) with the support skids (26) on the track (2, 3), a drive and braking system for the magnetic levitation vehicle (1) and an additional brake for the gradual braking of the magnetic levitation vehicle (1) in case of a fault before a destination (40) is reached, **characterized in that** the additional brake only contains the support skids (26) as active brake elements and is also provided with means for disconnecting selected levitation magnets (20a ... 20j), in order to lower the vehicle (1) in the event of a fault even before the destination (40) has been reached with support skids (26) on the track (2, 3) assigned to the disconnected levitation magnets (20a ... 20j), wherein the additional brake has a computer (47) which is set up to determine the number of support skids (26) on which the magnetic levitation vehicle (1) should be lowered and the times at which this should take place, depending on the speed of the magnetic levitation vehicle (1) and its distance from the destination (40).

5. The magnetic levitation railway according to claim 4, **characterized in that** the levitation magnets (20a ... 20j) are connected to regulating circuits (27a ... 27n) which are set up to produce a preselected gap (7) between the levitation magnets (20a ... 20j) and the track (2, 3) during the floating state and that the computer (47) is connected to the regulating circuits (27a ... 27n) .

## Revendications

1. Procédé pour l'exploitation d'un train à sustentation magnétique, lequel comprend une voie (2, 3) et un véhicule à sustentation magnétique (1) avec une pluralité d'aimants de portance (20a ... 20j) et des patins porteurs (26) qui leurs sont associés, dans lequel, lors de sa course le long de la voie (2, 3), le véhicule à sustentation magnétique (1) est maintenu dans un état de sustentation au moyen des aimants de portance (20a ... 20j), est déposé sur la voie (2, 3) en des points d'immobilisation cibles (40) au moyen des patins porteurs (26) par désactivation des aimants de portance (20a ... 20j) et est progressivement freiné avant l'atteinte d'un point d'immobilisation cible (40), dans lequel le freinage est provoqué ou assisté du simple fait que, dès avant l'atteinte du point d'immobilisation cible (40), au moins l'un des aimants de portance (20a ... 20j) est désactivé et le véhicule à sustentation magnétique (1) est déposé sur la voie (2, 3) au moyen du patin porteur (26) associé à cet aimant de portance (20a ... 20j) et est amené à l'arrêt au point d'immobilisation cible (40) en utilisant les forces de frictions ainsi produites, **caractérisé en ce que** les forces de friction nécessaires pour l'atteinte du point d'immobilisation cible (40) sont générées par le nombre de patins porteurs (26) sur lesquels le véhicule à sustentation magnétique (1) est déposé et les moments où cela a lieu, dans lequel la génération des forces de friction s'effectue en fonction de la vitesse du véhicule à sustentation magnétique (1) et de sa distance par rapport au point d'immobilisation cible (40).

2. Procédé selon la revendication 1, **caractérisé en ce que** les patins porteurs (26) sur lesquels le véhicule à sustentation magnétique (1) est déposé sont sélectionnés de manière à obtenir une répartition régulière de la charge dans le sens longitudinal et transversale du véhicule à sustentation magnétique (1).

3. Procédé selon la revendication 1 ou 2, **caractérisé en ce que** le nombre de patins porteurs (26) sur lesquels le véhicule à sustentation magnétique (1) est déposé est surveillé pendant un processus de freinage et est modifié en cas de besoin.

4. Train à sustentation magnétique avec une voie (2, 3), au moins un véhicule à sustentation magnétique (1) pouvant circuler le long de la voie (2, 3), présentant une pluralité d'aimants de portance (20a ... 20j) et de patins porteurs (26) qui leurs sont associés, lequel véhicule est maintenu dans un état de sustentation pendant la course au moyen des aimants de portance (20a ... 20j) et est déposé avec les patins porteurs (26) sur la voie (2, 3) en des points d'immobilisation cibles (40) par désactivation des aimants de portance (20a ... 20j), un système d'entraînement et de freinage pour le véhicule à sustentation magnétique (1) et un frein complémentaire pour le freinage progressif du véhicule à sustentation magnétique (1) en cas d'une perturbation avant l'atteinte d'un point d'immobilisation cible (40), **caractérisé en ce que** le frein complémentaire comporte uniquement les patins porteurs (26) en tant qu'éléments de freinage actifs et est doté de moyens pour la désactivation d'aimants de portance (20a ... 20j) sélectionnés afin de, en cas d'une perturbation, déposer le véhicule (1) avec les patins porteurs (26) associés aux aimants de portance (20a ... 20j) désactivés sur la voie (2, 3) dès avant l'atteinte du point d'immobilisation cible (40), dans lequel le frein complémentaire présente un ordinateur (47) étudié pour déterminer le nombre de patins porteurs (26) sur lesquels le véhicule à sustentation magnétique (1) doit être déposé et les moments où cela doit avoir lieu en fonction de la vitesse du véhicule à sustentation magnétique (1) et de sa distance par rapport au point d'immobilisation cible (40).

5. Train à sustentation magnétique selon la revendication 4, **caractérisé en ce que** les aimants de portance (20a ... 20j) sont en liaison avec des circuits de réglage (27a ... 27n) étudiés pour produire un espacement (7) présélectionné entre les aimants de portance (20a ... 20j) et la voie (2, 3) pendant l'état de sustentation, et que l'ordinateur (47) est raccordé aux circuits de réglage (27a ... 27n) .
